# EUROPEAN PATENT SPECIFICATION

(11) **EP 4 272 540 B1**
(45) Date of publication and mention of the grant of the patent: **05.11.2025**
(21) Application number: 22020413.5
(22) Date of filing: 29.08.2022
(51) Int. Cl.: A01F 11/00, A01F 11/02

(54) **EQUIPMENT FOR HEMP SEEDS CONDITIONING**
VORRICHTUNG ZUR KONDITIONIERUNG VON HANFSAMEN
ÉQUIPEMENT POUR LE CONDITIONNEMENT DE GRAINES DE CHANVRE

(30) Priority: 06.05.2022 RO 202200236
(43) Date of publication of application: 08.11.2023
(73) Proprietor: Institutul National de Cercetare Dezvoltare pentru Masini si Instalatii destinate Agriculturii si Industriei Alimentare-INMA, 013813 Bucuresti (RO)
(72) Inventor: Stroescu, Gheorghe, Bucuresti (RO); Olan, Mihai, Pascani, jud. Iasi (RO); Paun, Anisoasa, Bucuresti (RO); Vladut, Nicolae Valentin, Corbeanca, judetul Ilfov (RO); Matache, Mihai-Gabriel, Câmpina, Judet Prahova (RO); Popa, Lucretia, Bucuresti (RO)
(74) Representative: Strenc, Alexandru Cristian

(56) References cited:
- EP-A1- 3 622 807
- CN-A- 112 314 160
- DE-C- 125 946
- US-A- 701 770
- US-A- 716 587
- US-A1- 2021 237 093

## Description

This invention relates to an equipment for the conditioning of hemp seeds used mainly in the experimental plots of the specialized agricultural stations.

It is known technical solution from the patent document US 716587A "Flax-thresher" which refers to an equipment that processes flax, hemp, wheat and is intended especially to trash the stalks and process the hemp fiber. The solution comprises three pairs of rollers with different number of profiled channels that allow the fragmentation of flax or hemp stalks for fiber extraction and as additional function, it can extract hemp or wheat seeds as well. The equipment is composed of a module of tiered sieves (3-4 sets) with sieves of different sieve mesh sizes and is driven by an electric vibrator that can be adjusted in terms of frequency and intensity of vibration The disadvantage of the presented solution consists primarily in the fact that both the sieves and the fans for the presented pneumatic separator have a low speed, the rotation movement being taken over from the central drive system that rotates the drums. Even if it has three vibrating sieves, the vibration amplitude is constant and cannot ensure a correct separation. In addition, the energy source for driving the equipment is not specified. Correspondingly, by proposing a solution with a low degree of adjustments and modifications of the working parameters, the equipment does not adequately answer to the needs of experimental batches with small batches of seeds of different varieties.

In the present state of the art, it is equally known the patent document CN 207463630U**,** which relates to an inferior hemp seed sieving mechanism. The utility model discloses a sieving mechanism that belongs to grain screening field and that mainly includes fan, material case, pipeline and sealing connection.

Technical solution in the patent document CN 107510070A is also known, which relates to hemp seed husking equipment based on a centrifugal force technology and which comprises a body, wherein a first striking plate and a second striking plate are arranged in the middle of an inner cavity of the body so that hemp seeds can be struck to separate husks and kernels. Husks removal is done with an air jet.

Patent document CN 101181092 relates to a technical solution for separating the hemp seeds and the kernel from the husk, and which comprises the steps of breaking the husk, sieving - using a net-free vibrating sieve and packing, respectively.

Disadvantages of these conditioning installations consist of highly complex technical solutions, with high energy consumption, which are not cost-effective for conditioning the hemp seed harvested from the experimental plots, especially in the research stations.

**Technical problem** solved by the invention consists in the design of an equipment that carries out the threshing of hemp inflorescences harvested at maturity and the separation of impurities from the mass of threshed seeds. Conditioned seeds can be used as seed material or in the extraction of hemp oil.

The present invention provides a hemp seed conditioning equipment as defined by appended claim 1. Preferred aspects are defined by the dependent claims. The equipment according to the invention eliminates the disadvantages of the known solutions in that it consists of a mobile support provided with some wheels for movement and a processing module consisting of the housing wherein some beating drums are mounted by means of front bearings. Under these beating drums are mounted some concaves that are adjustable in distance from the beating drums, by means of axles and adjusting rods, which are positioned on supports. After adjusting the distances between the concaves and the beating drums, the axles of the concaves are locked in the working position on channels made in the equipment housing, with the help of nuts and washers.

After this technological stage, the seeds are taken over by a vibrating sieve to be sieved and a pneumatic separator consisting of the separation chamber, an axial fan and a cyclone separator with air filter bag and a bag for collecting waste in the form of fine hurds resulting from the beating and sieving process by vibration. The selected hemp seed will be collected in a seed box mounted below the separation chamber of the pneumatic separator.

The hemp seed conditioning equipment intended for small experimental plots has the following **advantages**:
▪ it is a small-sized piece of equipment, with a low manufacturing price, but which carries out all the necessary operations for the conditioning of hemp seeds, hemp inflorescence threshing, the separation of threshed hemp seeds from impurities;
▪ the equipment becomes operational in a short time, basically it just needs to be connected to the properly sized power source;
▪ it is a mobile equipment that can be used in various locations, as necessary;
▪ it has a safe and robust construction that works without jams.

An embodiment of the invention is shown in connection with Figs. 1-6, which represent:
Fig.1 - Hemp seed conditioning equipment - main view;
Fig.2 - Hemp seed conditioning equipment - lateral view;
Fig.3 - Hemp seed conditioning equipment - processing module;
Fig.4 - Hemp seed conditioning equipment - drums and concaves details;
Fig.5 - Hemp seed conditioning equipment - vibrating sieve details;
Fig.6 - Hemp seed conditioning equipment - pneumatic separator details.

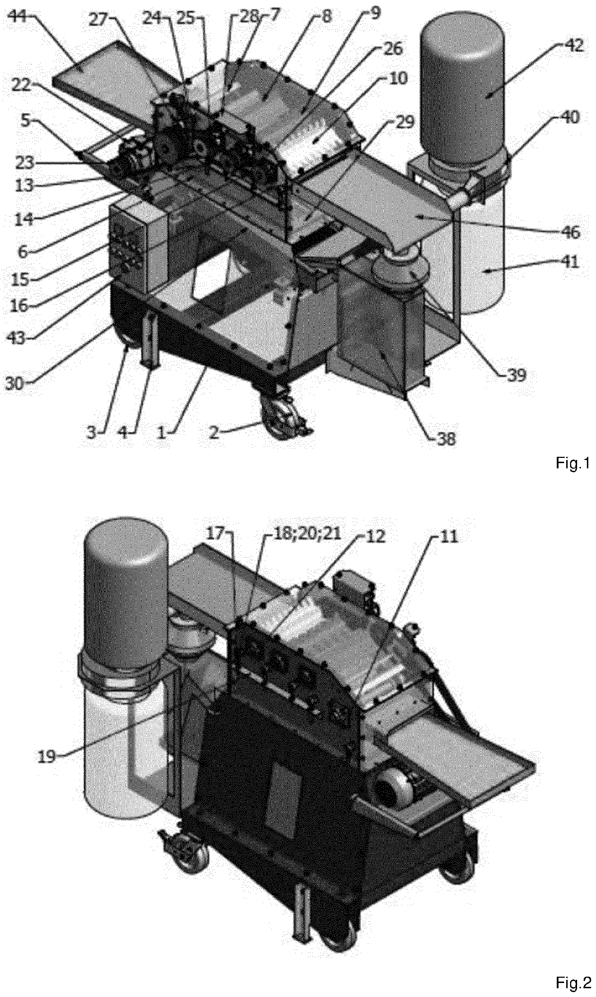

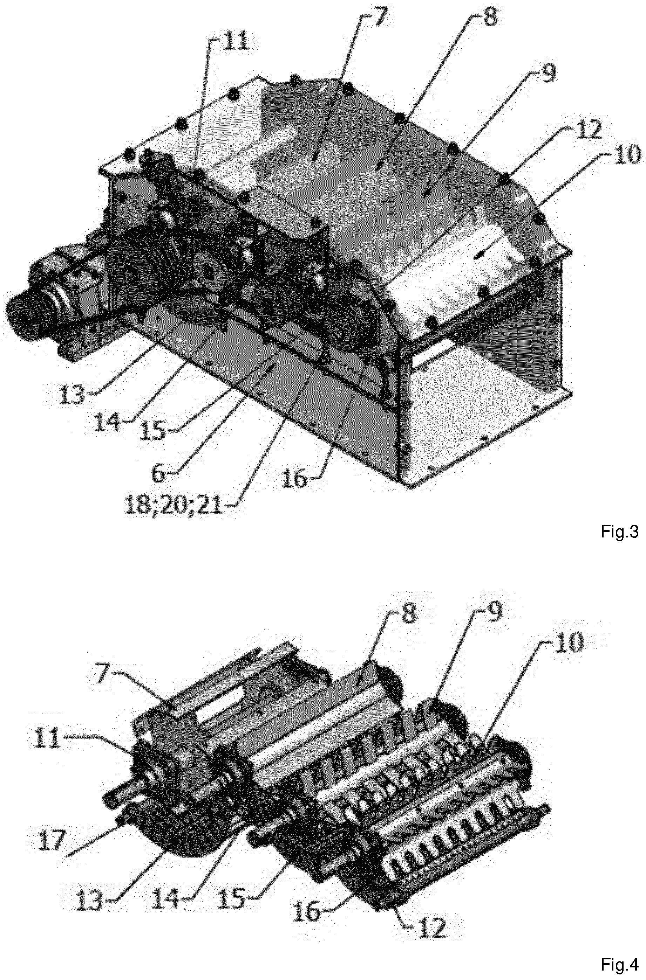

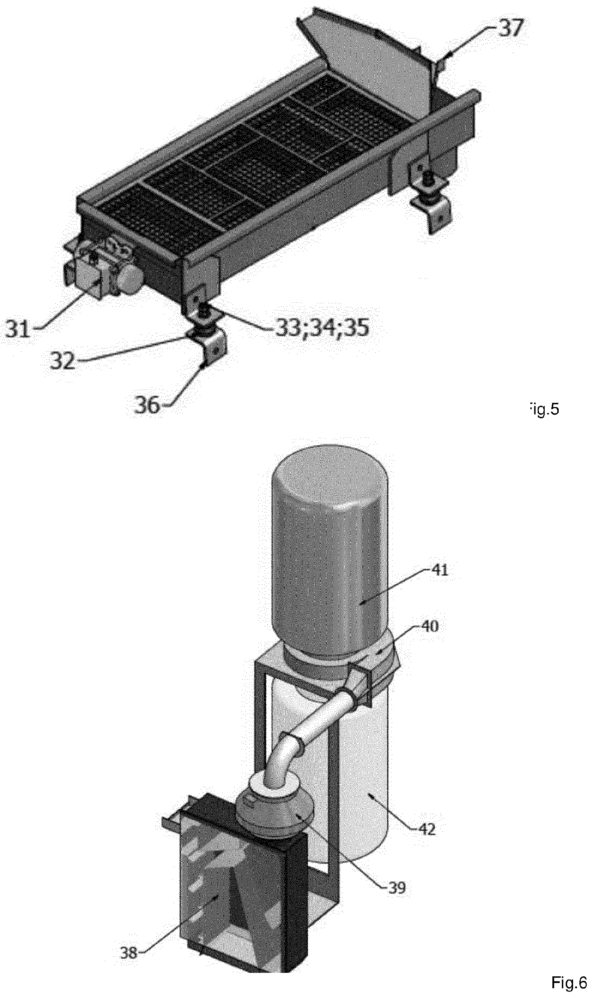

The hemp seed conditioning equipment, according to the invention presented in Figs. 1-6, consists of a mobile support (**1**) which is equipped with two self-locking swivel wheels (**2**) and two fixed wheels (**3**). Two adjustable feet (**4**) are used to lock the equipment on the floor in the working position, and a handle (**5**) is used to move the equipment. On the support (**1**) is mounted a first processing module consisting of the housing (**6**) wherein beating drums (**7,8,9,10**), are mounted by means of bearings (**11,12**). Under these beating drums (**7**,8,9,**10**) are mounted concaves (**13,14,15,16**) which are adjustable in distance from the beating drums with the help of axles (**17**) and adjusting rods (**18**) which are positioned on supports (**19**). After adjusting the distances between the concaves and the beating drums, the axles (**17**) are locked in the working position on channels made in the housing (**6**) with the help of nuts (**20**) and washers (**21**). The four beating drums (**7,8,9,10**), are different in terms of construction and placed in a well-defined geometrical position relative to each other so as to take over the hemp stalks with seeds, to separate the seeds and transport the stalks from one beating drum to another and further to the discharge box.

The beating drums are driven by means of an electric gear motor (**22**) which is sized appropriately and which transmits the rotational movement by means of a V-belt drive (**23**) to the beating drum (**7**) and some belt drives (**24,25,26**), to the beating drums (**8,9,10**). The transmission belt drives are tensioned by using tensioners (**27,28**).

The driving of the four beating drums between them is carried out with the set of belt drives (23, 24, 25, 26) and the pulleys, dimensioned as to ensure the increasing driving speed between the drums and, thus, to ensure the movement of the hemp stalks from a beating drum to the next.

Under the housing (**6**) is mounted a frustoconical box (**29**) which discharges the mixture of seeds and hemp hurds on a second processing module which is a vibrating sieve module (**30**), that comprises a layer of sieves with different diameters of the sieve meshes, thus achieving a multi-level sieving system, which is actuated by a motovibrator (**31**) and which is inclined towards the discharge end with the help of rubber buffers (**32**) and threaded rods (**33**), nuts (**34**) and Grower washers (**35**) fixed on supports (**36**) mounted on the mobile support (**1**).

The product selected by the sieve layer (**37**) is discharged into the a third processing module which is a pneumatic separator module specially designed as a filter system integrated inside the equipment, and consisting of the separation chamber (**38**), an axial fan (**39**) and a cyclone separator (**40**) equipped with an air filter bag made of textile material (**41**) and a bag (**42**) made of plastic material for collecting waste in the form of fine hurds resulting from the beating and sieving process by vibration. The selected hemp seed will be collected in a box mounted under the separation chamber (**38**) of the pneumatic separator. The control of the gear motor (**22**), the motovibrator (**31**) and the axial fan (**39**) is made by an electrical panel (**43**). The hemp seed conditioning equipment is provided with a feed hopper (**44**) and a discharge hopper (**45**).

## Claims

1. **Hemp seed conditioning equipment,** for the conditioning of hemp seeds from experimental plots, comprising a mobile support (**1**) in which there is a housing (**6**), wherein the equipment contains a first processing module in which the tips of the hemp stalks containing seeds are fed through a feed tank, consisting of the housing (**6**) wherein beating drums (7, 8, 9, 10) are mounted, which are different in terms of construction and placed in a well-defined geometrical position relative to each other, so as to take over the hemp stalks with seeds, to separate the seeds and transport the stalks from one beating drum to another, these beating drums being supported by bearings (**11,12**), wherein the equipment further comprises a second vibrating sieve module (**30**) which ensures a first level of separation through a multi-level sieving system, and respectively a third integrated pneumatic separator module, through which the final separation of hemp seeds from impurities is carried out, **characterized by the fact that** the equipment is driven by a gear motor (22) with electric drive and controlled by a frequency converter for speed regulation, located in an electrical panel (43), that the first processing module is configured such that under the beating drums (**7,8,9,10**) there are mounted concaves (13, 14, 15, 16) adjustable in distance from the beating drums with the help of axles (**17**) and adjusting rods (**18**) positioned on supports (**19**), configured to adjust the distances between the concaves and the beating drums, the axles (**17**) being configured to lock in the working position on channels made in the housing (**6**) with the help of nuts (**20**) and washers (**21**), that the beating drums are configured to be driven by means of the electric gear motor (**22**) which is sized appropriately and which is configured to transmit the rotational movement by means of a V-belt drive (**23**) to a first beating drum (**7**) of the beating drums (7, 8, 9, 10) and by means of belt drives (24, 25, 26) to the other beating drums (8, 9, 10) of the beating drums (7, 8, 9, 10), the transmission belts being tensioned by using tensioners (27, 28), the set of belts of the belt drives (**24,25,26**), and the pulleys dimensioned as to ensure the increasing driving speed between the drums and thus to ensure the movement of the hemp stalks from a beating drum to the next.

2. **Hemp seed conditioning equipment,** according to claim 1, **characterized by the fact that** the second vibrating sieve module (30) on which the mixture of seeds and hemp hurds is poured through a frustoconical box (29) contains a sieve layer (37) with different diameters of sieve and is configured to be actuated by an electric motovibrator (**31**) and which is inclined towards the discharge end with the help of rubber buffers (**32**) and threaded rods (**33**), nuts (**34**) and Grower washers (**35**) fixed on supports (**36**) mounted on the mobile support (**1**).

3. **Hemp seed conditioning equipment,** according to claim 1, **characterized by the fact that** the pneumatic separator is conceived as a filter system integrated inside the equipment, is configured to take over the sieved material from the sieve (**37**) and comprises a separation chamber (**38**), an axial fan (**39**) and a cyclone separator (**40**) equipped with an air filter bag made of textile material (**41**) and a bag (**42**) made of plastic material for collecting waste in the form of fine hurds resulting from the beating and sieving process by vibration, so that the selected hemp seed will be collected in a box mounted under the separation chamber (**38**) of the pneumatic separator.

## Patentansprüche

1. Vorrichtung zur Konditionierung von Hanfsamen aus Versuchsflächen bestehend aus einem mobilen Träger (1), in dem sich ein Gehäuse (6) befindet, wobei die Vorrichtung ein erstes Verarbeitungsmodul enthält, in dem die Spitzen der Hanfstängel mit Samen durch einen Zufuhrbehälter geführt werden, bestehnd aus dem Gehäuse (6), in dem Schlagtrommeln (7,8,9,10) montiert sind, die sich in ihrer Konstruktion unterscheiden und in einer genau definierten geometrischen Position zueinander angeordnet sind, um die Hanfstängel mit Samen zu übernehmen, die Samen zu trennen und die Stängel von einer Schlagtrommel zur anderen zu transportieren, wobei diese Schlagtrommeln werden von Lagern (11) und (12) getragen, wobei die Vorrrichtung weiterhin umfasst ein zweites Vibrationssiebmodul (30), das eine erste Trennstufe durch ein mehrstufiges Siebsystem sicherstellt, und jeweils ein drittes integriertes pneumatisches Trennmodul, durch das die endgültige Trennung der Hanfsamen von Verunreinigungen erfolgt wird, **dadurch gekennzeichnet dass** die Vorrrichtung von einem Getriebemotor (22) mit Elektroantrieb angetrieben und von einem Frequenzumsetzer zur Geschwindigkeitsregelung gesteuert wird, der sich in einer Schalttafel (43) befindet, dass das erste Verarbeitungsmodul so konfiguriert ist, dass unter die Schlagtrommeln (7,8,9,10) sind Konkaven (13,14,15,16) montiert, im Abstand zu den Schlagtrommeln mit Hilfe von Achsen (17) und Einstellstangen (18) einstellbar, auf Stützen (19) positioniert und so konfiguriert, um die Abstände zwischen den Dreschkörben und den Schlagtrommeln anzupassen, wobei die Achsen (17) so konfiguriert sind, dass sie in der Arbeitsposition in im Gehäuse (6) ausgebildeten Kanälen einrasten mit Hilfe von Muttern (20) und Unterlegscheiben (21), so dass die Schlagtrommeln so konfiguriert sind, dass mittels eines entsprechend dimensionierten elektrischen Getriebemotors (22) angetrieben werden, der die Drehbewegung mittels einer Übertragung über Keilriemenantriebe (23) auf eine erste Schlagtrommel (7) der Schlagtrommeln (7,8,9,10) und mittels Übertragung durch Riemenantriebe (24,25,26) auf die anderen Schlagtrommeln (8,9,10) der Schlagtrommeln (7,8,9,10) überträgt, wobei die Antriebsriemen mit Spannern (27,28) gespannt werden, die Keilriemensätze der Riementriebe (24,25,26 ) und und die Riemenscheiben so dimensioniert sind, dass sie die zunehmende Antriebsgeschwindigkeit zwischen den Trommeln gewährleisten und somit die Bewegung des Hanfs sicherstellen Stängel von einer Schlagtrommel zur nächsten.

2. Vorrichtung zur Konditionierung von Hanfsamen nach Anspruch 1, **dadurch gekennzeichnet dass** das zweite Vibrationssiebmodul (30), auf das die Mischung aus Samen und Hanfschäben durch einen kegelstumpfförmigen Kasten (29) geschüttet wird, eine Siebschicht (37) mit unterschiedlichen Siebdurchmessern enthält, und so konfiguriert ist, dass es durch einen elektrischen Motorvibrator (31) angetrieben wird und zum Auslassende hin geneigt ist, mit Hilfe von Gummipuffern (32) und Gewindestangen (33), Muttern (34) und Unterlegscheiben (35), befestigt auf Stützen (36), die auf dem beweglichen Träger (1) montiert sind.

3. Vorrichtung zur Konditionierung von Hanfsamen nach Anspruch 1, **dadurch gekennzeichnet dass** der pneumatische Separator, der als in die Vorrichtung integriertes Filtersystem konzipiert ist, um das gesiebte Material vom Sieb (37) zu übernehmen und aus der Separationskammer (38), einem Axialventilator (39) und einem Zyklonabscheider (40) besteht, der mit einem Luftfilterbeutel aus Textilmaterial (41) und einem Beutel (42) aus Kunststoff zum Auffangen von Abfällen in Form von feinen Schäben ausgestattet ist, die beim Schlag- und Siebvorgang durch Vibration entstehen, sodass die ausgewählten Hanfsamen in einer unter der Separationskammer (38) des pneumatischen Separators montierten Box gesammelt werden.

## Revendications

1. Équipement pour le conditionnement de graines de chanvre issues de parcelles expérimentales, comprenant un support mobile (1) abritant un boîtier (6) dans lequel l'équipement contient un premier module de traitement dans lequel les extrémités des tiges de chanvre contenant des graines sont acheminées à travers un réservoir d'alimentation constitué du boîtier (6) dans lequel sont montés des tambours de battage (8,9,10) de construction différente et placés dans une position géométrique bien définie les uns par rapport aux autres, de manière à prendre en charge les tiges de chanvre avec les graines, à séparer les graines et à transporter les tiges d'un tambour de battage à l'autre, ces tambours de battage étant supportés par des paliers (11,12). dans lequel l'équipement comprend en outre un deuxième module de tamis vibrant (30) qui assure un premier niveau de séparation à travers un système de tamisage à plusieurs niveaux, et respectivement un troisième module séparateur pneumatique intégré, à travers lequel la séparation finale des graines de chanvre des impuretés est effectuée, **caractérisé en ce que** l'équipement est entraîné par un motoréducteur (22) à entraînement électrique et contrôlé par un convertisseur de fréquence pour la régulation de la vitesse, situé dans un panneau électrique (43), que le premier module de traitement est configuré de telle sorte que sous ces tambours de battage (7,8,9,10) sont montés des contre-batteurs (13,14,15,16) réglables en distance par rapport au tambour de battage à l'aide d'axes (17) et de tiges de réglage (18) positionnées sur des supports (19), configuré pour ajuster les distances entre les contre-batteurs et les tambours de battage, les axes (17) étant configuré pour bloquer en position de travail sur des canaux ménagés dans le boitier (6) à l'aide d'écrous (20) et de rondelles (21), que les tambours de battage sont configuré pour être entraînés par un motoréducteur électrique (22) dimensionné de manière appropriée, et qui est configuré pour transmettre le mouvement de rotation par l'intermédiaire de transmissions par courroie trapézoïdale (23) a un premier tambour de battage (7) des tambours de battage (7,8,9,10), et par l'intermédiaire de transmissions par courroie (24,25,26) aux autres tambours de battage (8,9,10) des tambours de battage (7,8,9,10), les courroies de transmission étant tendues à l'aide de tendeurs (27,28), l'ensemble des courroies des transmissions par courroie (24,25,26) et les poulies sont dimensionnés de manière à assure l'augmentation de la vitesse d'entraînement entre les tambours et ainsi à assurer le mouvement de tiges de chanvre d'un tambour de battage au suivant..

2. Equipement pour le conditionnement de graines de chanvre, selon la revendication 1, **caractérisé en ce que** le deuxième module de tamis vibrant (30) sur lequel le mélange de graines et de chènevis est versé à travers une boîte tronconique (29), contient une couche de tamis (37) avec différents diamètres des tamis, et est configuré pour être actionné par un motovibrateur électrique (31) et qui est incliné vers l'extrémité de décharge à l'aide de tampons en caoutchouc (32) et de tiges filetées (33), d'écrous (34) et de rondelles Grower (35) fixés sur des supports (36) montés sur le support mobile (1).

3. Equipement pour le conditionnement de graines de chanvre, selon la revendication 1, **caractérisé en ce que** le séparateur pneumatique est conçu comme un système de filtre intégré à l'intérieur de l'équipement, est configuré pour prendre en charge la matière tamisée du tamis (37) et comprend une chambre de séparation (38), un ventilateur axial (39) et un séparateur cyclonique (40) équipé d'un sac filtrant à air en matière textile (41) et d'un sac (42) en matière plastique pour collecter les déchets sous forme de fines chènevotte résultant du processus de battage et de tamisage par vibration, de sorte que les graines de chanvre sélectionnées seront collectées dans une boîte montée sous la chambre de séparation (38) du séparateur pneumatique.
